Europäisches Patentamt

**European Patent Office**

Office européen des brevets

(19)

(11) Veröffentlichungsnummer: **0 063 231**
**B1**

(12)                    **EUROPÄISCHE PATENTSCHRIFT**

(45) Veröffentlichungstag der Patentschrift:
**12.09.84**

(21) Anmeldenummer: **82101728.2**

(22) Anmeldetag: **05.03.82**

(51) Int. Cl.³: **C 01 B 25/023**, B 01 J 4/00,
B 02 C 23/02

(54) **Dosiervorrichtung.**

(30) Priorität: **04.04.81 DE 3113705**

(43) Veröffentlichungstag der Anmeldung:
**27.10.82 Patentblatt 82/43**

(45) Bekanntmachung des Hinweises auf die Patenterteilung:
**12.09.84 Patentblatt 84/37**

(84) Benannte Vertragsstaaten:
**DE FR GB IT SE**

(56) Entgegenhaltungen:
**EP - A - 0 015 384**
**DE - B - 2 141 315**

(73) Patentinhaber: **HOECHST AKTIENGESELLSCHAFT,**
**Postfach 80 03 20, D-6230 Frankfurt am Main 80 (DE)**

(72) Erfinder: **Stephan, Hans-Werner, Olbergstrasse 77,**
**D-5000 Köln 41 (DE)**
Erfinder: **Klein, Hermann, Dr.-Kürten-Strasse 1,**
**D-5030 Hürth (DE)**
Erfinder: **Lehr, Klaus, Dr., Alleestrasse 52, D-5030 Hürth**
**(DE)**

## Beschreibung

Die vorliegende Erfindung betrifft eine Vorrichtung zum Dosieren von flüssigem gelbem Phosphor in eine rotierende Kugelmühle zur Gewinnung von rotem Phosphor, bestehend aus einem mit der Kugelmühle starr verbundenen, inneren Rohr, wobei das innere Rohr teilweise von einem feststehenden äusseren Rohr konzentrisch umgeben ist, aus einem mit dem inneren Rohr strömungsmässig verbundenen Zuführungsrohr für gelben Phosphor und aus einem in das der Kugelmühle zugewandten Ende des inneren Rohres eingesetzten Ventil mit parallel zum inneren Rohr verlaufender Ventilstange.

Aus der DE-A1-2907059 bzw. der EP-A1-0015384 ist ein Verfahren zur Herstellung von rotem Phosphor bekannt, bei welchem flüssiger gelber Phosphor in eine geschlossene, vorgewärmte Kugelmühle in einer solchen Menge je Zeiteinheit eingetragen wird, dass in der Kugelmühle die Reaktionstemperatur ohne weitere äussere Wärmezufuhr aufrechterhalten wird. Zur Durchführung des Verfahrens ist an einer Hohlwelle der Kugelmühle eine Dosiervorrichtung angeordnet, welche aus einem feststehenden gewinkelten Zuführungsrohr für gelben Phosphor besteht, dessen einer Schenkel von einem mit der Kugelmühle verbundenen doppelwandigen drehbaren Rohr umgeben ist. Dabei wird die Abdichtung zwischen dem einen Schenkel und dem drehbaren Rohr durch eine Stopfbuchse bewirkt. Am an der Drehtrommel befindlichen Ende des drehbaren Rohres befindet sich ein Ventil, welches mit Hilfe einer Dosierstange, die das drehbare Rohr sowie den einen Schenkel des Zuführungsrohres durchdringt und durch einen Kolben betätigbar ist, geschlossen und geöffnet werden kann. Ein Teil des doppelwandigen drehbaren Rohres wird von zwei Faltenbälgen gebildet, welche konzentrisch zur Dosierstange mit Abstand voneinander angeordnet sind, wodurch der Hub der Dosierstange kompensiert wird.

Nachteilig ist bei der bekannten Dosiereinrichtung, dass bei ihrem Betrieb die Faltenbälge nicht nur auf Dilatation bzw. Kompression, sondern auch auf Torsion beansprucht werden, wodurch ihre Standzeit erheblich herabgesetzt wird. Dabei ist es für den Betrieb besonders störend, wenn es bei einem Defekt am inneren Faltenbalg zur Vermischung des Warmwassers mit gelbem Phosphor kommt.

Es ist daher Aufgabe der vorliegenden Patentanmeldung, eine Vorrichtung zum Dosieren von flüssigem gelbem Phosphor in eine Kugelmühle, welche aus einem inneren Rohr, einem äusseren Rohr, einem Zuführungsrohr für gelben Phosphor sowie aus einem in das innere Rohr eingesetzten Ventil mit Ventilstange besteht, anzugeben, bei welcher auf die Verwendung von zusätzlich auf Torsion beanspruchten Faltenbälgen verzichtet werden kann. Das wird erfindungsgemäss dadurch erreicht, dass das Zuführungsrohr für gelben Phosphor in eine Ringkammer einmündet; dass zur strömungsmässigen Verbindung der Ringkammer mit dem Innenraum des inneren Rohres das innere Rohr im Bereich der Ringkammer mit einer senkrecht zur Ventilstange verlaufenden Bohrung versehen ist; dass in das der Kugelmühle abgewandte Ende des inneren Rohres ein Stopfen mit zentrischer Durchbohrung eingesetzt ist, in welcher die Ventilstange gleitend gelagert ist; und dass die Ventilstange innerhalb des inneren Rohres teilweise von einem Faltenbalg konzentrisch umgeben ist, wobei der Faltenbalg mit dem Stopfen und mit der Ventilstange dichtschliessend verbunden ist.

Die Vorrichtung gemäss der Erfindung kann wahlweise auch noch dadurch weitergebildet sein, dass

a) ein mit dem äusseren Rohr starr verbundener Wasserkasten vorgesehen ist, durch welchen das Zuführungsrohr für gelben Phosphor hindurchführt und welcher das innere Rohr konzentrisch umgibt sowie auf ihm drehbar gelagert ist,

b) die Ringkammer konzentrisch von einer Stopfbuchse umgeben ist,

c) in das äussere Rohr ein Ringkanal zur Beaufschlagung der im inneren Rohr befindlichen Hohlräume mit Warmwasser eingearbeitet ist,

d) ein Stellbetrieb mit Hilfe von Abstandshaltern am äusseren Rohr befestigt ist,

e) die Schubstange des Stellbetriebes mit einer Kupplung verbunden ist, in welcher das mit einer Scheibe versehene Ende der Ventilstange drehbeweglich angeordnet ist,

f) an der Unterseite des Wasserkastens eine im Boden verankerte Drehmomentenstütze befestigt ist,

g) das Ventil federbelastet ist.

Die erfindungsgemässe Vorrichtung weist nur noch einen Faltenbalg auf, der überdies zur Kompensation der Hübe der Ventilstange nur auf Dilation bzw. auf Kompression beansprucht wird.

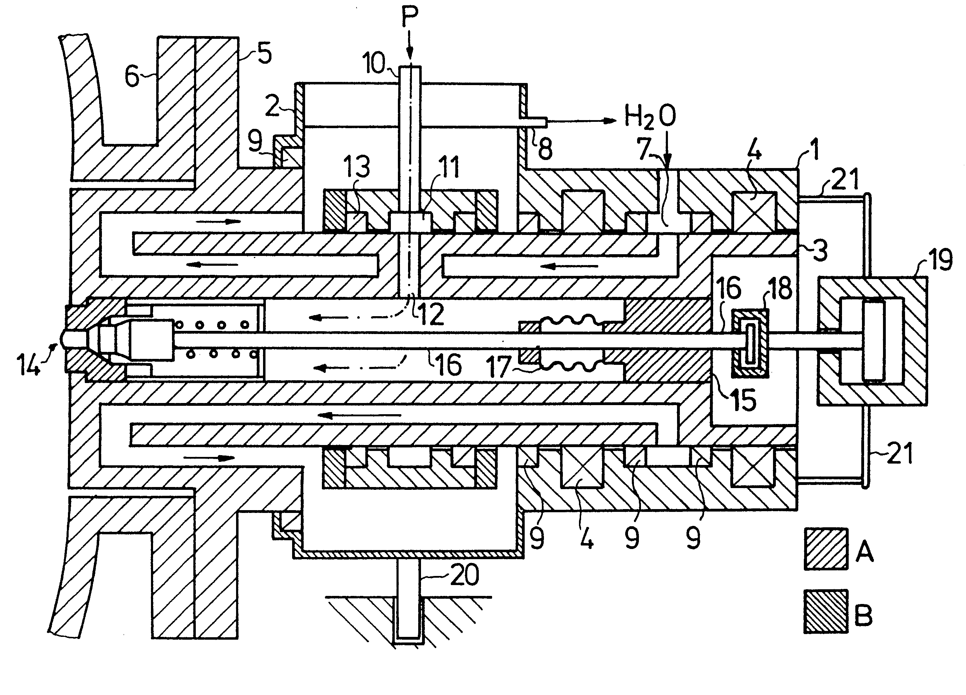

In der beigefügten Zeichnung ist eine Dosiervorrichtung gemäss der Erfindung schematisch und im Schnitt dargestellt.

Ein feststehendes äusseres Rohr 1 und ein mit ihm starr verbundener Wasserkasten 2 wird durch eine an der Unterseite des Wasserkastens 2 befestigte und im Boden verankerte Drehmomentenstütze 20 in seiner Lage gehalten. Im feststehenden äusseren Rohr 1 ist ein inneres Rohr 3 mit Hilfe von Kugellagern 4 drehbar gelagert. Das innere Rohr 3 weist nahe seinem vorderen Ende einen Flansch 5 auf, welcher mit dem Kugelmühlen-Flansch 6 verbunden ist. Die im inneren Rohr 3 befindlichen Hohlräume sind über den in das äussere Rohr 1 eingearbeiteten Ringkanal 7 mit Wasser beaufschlagbar, während das Wasser aus dem inneren Rohr 3 in den Wasserkasten 2 austritt, aus dem es über den Stutzen 8 abläuft. Dabei erfolgt die Abdichtung zwischen dem Ringkanal 7 und dem inneren Rohr 3 sowie zwischen dem inneren Rohr 3 und dem Wasserkasten 2 über Radial-Wellendichtringe 9. Die Zuführung von gelbem Phosphor in das Innenrohr 3 erfolgt durch das mit einer Warmwassermantelheizung versehene Zuführungsrohr 10, eine in das äussere Rohr 1 eingearbeitete Ringkammer 11 und eine Bohrung 12 im inneren Rohr 3, wobei die Abdichtung zwischen der Ringkammer 11 und der Bohrung 12 durch eine Stopfbuchse 13 erfolgt. Das innere Rohr 3 weist an seiner der Kugelmühle zugewandten Seite ein federbelastetes Ventil 14 auf, während das innere Rohr 3 auf seiner entgegengesetzten Seite mit einem mit einer zentrischen Bohrung versehenen Stopfen 15 verschlossen ist, durch den die Ventilstange 16 hindurchgeführt ist. Innerhalb des inneren Rohres 3 ist die Ventilstange 16 teilweise von einem Faltenbalg 17 umhüllt, welches einerseits mit der Ventilstange 16 und andererseits mit dem Stopfen 15 dichtschliessend verbunden ist. Das aus dem Stopfen 15 herausragende Ende der Ventilstange 16 ist über eine Kupplung 18 mit einem mit Abstandshaltern 21 am äusseren Rohr 1 befestigten Stellbetrieb 19 kraftschlüssig verbunden.

Die Funktionsweise der erfindungsgemässen Dosiereinrichtung ist wie folgt: Zunächst wird den Hohlräumen im inneren Rohr 3 über den Ringkanal 7 Warmwasser (ca. 60°C ) zugeführt, welches in den Wasserkasten 2 gelangt und durch den dortigen Stutzen 8 abläuft. Nun wird gelber Phosphor über das Zuführungsrohr 10, die Ringkammer 11 und die Bohrung 12 in das innere Rohr 3 gepumpt, welcher durch taktweises Öffnen des Ventils 14 mit Hilfe der Ventilstange 16 und des Stellbetriebes 19 in die rotierende, vorgeheizte Kugelmühle eindosiert wird. Dabei werden die Öffnungs- und Schliesszeiten des Ventils 14 so gesteuert, dass in der Kugelmühle ohne äussere Wärmezufuhr eine vorgegebene Temperatur aufrechterhalten wird.

In der Zeichnung sind die rotierenden Teile mit der Schraffur gemäss A versehen, während mit der Schraffur gemäss B versehene Teile stehende Teile sind.

## Patentansprüche

1. Vorrichtung zum Dosieren von flüssigem gelbem Phosphor in eine rotierende Kugelmühle zur Gewinnung von rotem Phosphor, bestehend aus einem mit der Kugelmühle starr verbundenen, inneren Rohr, wobei das innere Rohr teilweise von einem feststehenden äusseren Rohr konzentrisch umgeben ist, aus einem mit dem inneren Rohr strömungsmässig verbundenen Zuführungsrohr für gelben Phosphor und aus einem in das der Kugelmühle zugewandten Ende des inneren Rohres eingesetzten Ventil mit parallel zum inneren Rohr verlaufender Ventilstange, dadurch gekennzeichnet, dass das Zuführungsrohr (10) für gelben Phosphor in eine Ringkammer (11) einmündet; dass zur strömungsmässigen Verbindung der Ringkammer (11) mit dem Innenraum des inneren Rohres (3) das innere Rohr (3) im Bereich der Ringkammer (11) mit einer senkrecht zur Ventilstange (16) verlaufenden Bohrung (12) versehen ist; dass in das der Kugelmühle abgewandte Ende des inneren Rohres (3) ein Stopfen (15) mit zentrischer Durchbohrung eingesetzt ist, in welcher die Ventilstange (16) gleitend gelagert ist; und dass die Ventilstange (16) innerhalb des inneren Rohres (3) teilweise von einem Faltenbalg (17) konzentrisch umgeben ist, wobei der Faltenbalg (17) mit dem Stopfen (15) und mit der Ventilstange (16) dichtschliessend verbunden ist.

2. Vorrichtung nach Anspruch 1, dadurch gekennzeichnet, dass ein mit dem äusseren Rohr (1) starr verbundener Wasserkasten (2) vorgesehen ist, durch welchen das Zuführungsrohr (10) für gelben Phosphor hindurchführt und welcher das innere Rohr (3) konzentrisch umgibt sowie auf ihm drehbar gelagert ist.

3. Vorrichtung nach einem der Ansprüche 1 oder 2, dadurch gekennzeichnet, dass die Ringkammer (11) konzentrisch von einer Stopfbuchse (13) umgeben ist.

4. Vorrichtung nach einem der Ansprüche 1 bis 3, dadurch gekennzeichnet, dass in das äussere Rohr (1) ein Ringkanal (7) zur Beaufschlagung der im inneren Rohr (3) befindlichen Hohlräume mit Warmwasser eingearbeitet ist.

5. Vorrichtung nach einem der Ansprüche 1 bis 4, dadurch gekennzeichnet, dass ein Stellbetrieb (19) mit Hilfe von Abstandshaltern (21) am äusseren Rohr (1) befestigt ist.

6. Vorrichtung nach einem der Ansprüche 1 bis 5, dadurch gekennzeichnet, dass die Schubstange des Stellbetriebes (19) mit einer Kupplung (18) verbunden ist, in welcher das mit einer Scheibe versehene Ende der Ventilstange (16) drehbeweglich angeordnet ist.

7. Vorrichtung nach einem der Ansprüche 1 bis 6, dadurch gekennzeichnet, dass an der Unterseite des Wasserkastens (2) eine im Boden verankerte Drehmomentenstütze (20) befestigt ist.

8. Vorrichtung nach einem der Ansprüche 1 bis 7, dadurch gekennzeichnet, dass das Ventil (14) federbelastet ist.

## Claims

1. Device for metering liquid yellow phosphorus into a rotating ball mill for the production of red phosphorus, formed of: an inner tube rigidly connected to the ball mill, the inner tube being partially surrounded concentrically by a stationary outer tube; a yellow phosphorus feed pipe flow-connected to the inner tube, and a valve of which the rod runs parallel to the inner tube, is installed near its end close to the ball mill, wherein the yellow phosphorus feed pipe (10) opens into an annular chamber (11); wherein, in order to flow-connect the annular chamber (11) to the interior of the inner tube (3), the inner tube (3) is provided, in the region of the annular chamber (11), with a bore (12) extending perpendicularly with respect to the valve rod (16); wherein a plug (15) provided with a central bore which slidingly receives the valve rod (16) is installed in the inner tube (3) near its end remote from the ball mill; and wherein the valve rod (16) is partially surrounded concentrically inside the inner tube (3) by a bellows (17), the bellows (17) being tightly connected to the plug (15) and valve rod (16).

2. Device as claimed in claim 1, wherein the outer tube (1) is rigidly connected to a water tank (2) through which is passed the yellow phosphorus feed pipe (10) and which concentrically surrounds the inner tube (3) and is rotatably mounted thereon.

3. Device as claimed in claim 1 or 2, wherein the annular chamber (11) is concentrically surrounded by a packing box (13).

4. Device as claimed in any of claims 1 to 3, wherein the outer tube (1) is formed with an annular channel (7) permitting warm water to be admitted to the hollow spaces inside the inner tube (3).

5. Device as claimed in any of claims 1 to 4, wherein an adjusting element (19) is secured to the outer tube (1) by means of spacers (21).

6. Device as claimed in any of claims 1 to 5, wherein the thrust rod forming part of the adjusting element (19) is connected to a clutch (18) which rotatably receives the disk-provided end of the valve rod (16).

7. Device as claimed in any of claims 1 to 6, wherein a torque supporting means (20) anchored to the floor is secured to the underside of the water tank (2).

8. Device as claimed in any of claims 1 to 7, wherein the valve (14) is spring-loaded.

## Revendications

1. Dispositif de dosage de phosphore blanc liquide dans un broyeur à billes tournant pour la production de phosphore rouge, constitué par un tube intérieur relié rigidement au broyeur à billes, le tube intérieur étant partiellement entouré concentriquement par un tube extérieur stationnaire; un tube d'introduction de phosphore blanc relié dans le sens d'écoulement au tube intérieur, et une soupape dont la tige s'étend parallèlement au tube intérieur, la soupape étant agencée dans l'extrémité voisine du broyeur à billes, caractérisé en ce que le tube d'introduction (10) du phosphore blanc débouche dans une chambre annulaire (11); en ce que, pour relier la chambre annulaire (11) dans le sens de l'écoulement à l'espace intérieur du tube intérieur (3), le tube intérieur (3) est muni, dans la région de la chambre annulaire (11), d'un alésage (12) perpendiculaire à la tige de soupape (16); en ce qu'un bouchon (15) muni d'un alésage central, dans lequel la tige de soupape (16) est montée coulissante, est agencé dans l'extrémité du tube intérieur (3) opposée au broyeur à billes, et en ce que la tige de soupape (16) est partiellement entourée concentriquement, à l'intérieur du tube intérieur (3), par un soufflet (17) relié de façon étanche au bouchon (15) et à la tige de soupape (16).

2. Dispositif selon la revendication 1, caractérisé en ce que le tube extérieur (1) est rigidement relié à un réservoir d'eau (2) par lequel passe le tube d'introduction (10) de phosphore blanc et qui entoure concentriquement le tube intérieur (3) et sur lequel il est monté à rotation.

3. Dispositif selon l'une des revendications 1 ou 2, caractérisé en ce que la chambre annulaire (11) est concentriquement entourée par un presse-étoupe (13).

4. Dispositif selon l'une des revendications 1 à 3, caractérisé en ce qu'un passage annulaire (7) est agencé dans le tube extérieur (1) pour l'introduction d'eau chaude dans les espaces creux se trouvant à l'intérieur du tube intérieur (3).

5. Dispositif selon l'une des revendications 1 à 4, caractérisé en ce qu'une commande de position (19) est fixée au tube extérieur (1) à l'aide d'entretoises (21).

6. Dispositif selon l'une des revendications 1 à 5, caractérisé en ce que la bielle de la commande de position (19) est reliée à un raccord d'accouplement (18), dans lequel tourne l'extrémité de la tige de soupape (16) munie d'un disque.

7. Dispositif selon l'une des revendications 1 à 6, caractérisé en ce qu'un appui de couple (20) ancré dans le sol est fixé au fond du réservoir d'eau (2).

8. Dispositif selon l'une des revendications 1 à 7, caractérisé en ce que la soupape (14) est commandée par un ressort.

0 063 231